# EUROPEAN PATENT SPECIFICATION

(11) **EP 1 281 739 B1**
(45) Date of publication and mention of the grant of the patent: **11.04.2007**
(21) Application number: 01118554.3
(22) Date of filing: 01.08.2001
(51) Int. Cl.: C09J 133/06, C08F 20/12

(54) **Acrylic pressure-sensitive adhesive and process for producing the same**
Acrylische druckempfindliche Klebstoff-Zusammensetzung und Verfahren zu seiner Herstellung
Composition acrylique adhésive sensible à la pression et son procédé de préparation

(43) Date of publication of application: 05.02.2003
(73) Proprietor: NITTO DENKO CORPORATION, Osaka (JP)
(72) Inventor: Yamamoto, Takayuki, Ibaraki-shi, Osaka (JP); Taruno, Tomohiro, Ibaraki-shi, Osaka (JP)
(74) Representative: Grünecker, Kinkeldey, Stockmair & Schwanhäusser Anwaltssozietät

(56) References cited:
- EP-A- 0 815 145
- EP-A- 1 016 680

## Description

### FIELD OF THE INVENTION

This invention relates to a process of producing an acrylic pressure-sensitive adhesive. The acrylic pressure-sensitive adhesive is produced by advantageous continuous polymerization and has a reduced low molecular component content and therefore hardly contaminates an adherend.

### BACKGROUD OF THE INVENTION

Acrylic pressure-sensitive adhesives are widely used as a pressure-sensitive adhesive layer of an adhesive tape, an adhesive label or an adhesive sheet because of their excellent pressure-sensitive adhesion characteristics (pressure adhesion and cohesion) weather resistance, oil resistance and the like.

Commonly employed acrylic pressure-sensitive adhesives usually comprise a copolymer prepared from a monomer mixture comprising an alkyl (meth)acrylate which provides a tacky polymer having a relatively low glass transition temperature, such as n-butyl acrylate or 2-ethylhexyl acrylate, as a main monomer and, in addition, a monomer having a functional group for increasing crosslinking sites or for enhancing intermolecular force thereby to improve cohesiveness, such as acrylic acid, 2-hydroxyethyl (meth)acrylate or acrylamide, or a hard monomer providing a polymer having a relatively high glass transition temperature, such as styrene or vinyl acetate.

These acrylic pressure-sensitive adhesives are generally produced by solution polymerization, suspension polymerization or emulsion polymerization. However, solution polymerization cannot get rid of the environmental pollution problem arising from use of a large quantity of an organic solvent. Also, isolation of the produced polymer requires an extra step and energy for vaporization of the organic solvent, which leads to an increased production cost. Suspension polymerization and emulsion polymerization are disadvantageous in that an emulsifying agent or a dispersing agent is incorporated into the resulting polymer, making it difficult to obtain a pure product. Isolation of the polymer involves the same problem as in solution polymerization. Moreover, these processes, carried out in a batch system, achieve poor uniformity in polymerization conditions such as temperature and monomer concentration. Therefore, an attempt to increase the polymerization conversion results in a wider molecular weight distribution with a considerable proportion of low-molecular components. Existence of a large amount of low-molecular components can hinder pressure-sensitive adhesive properties and increase components that may be transferred to an adherend to cause contamination.

Various proposals have been made on a continuous bulk polymerization technique in which a reactor comprising a single-screw or twin-screw extruder is used to carry out polymerization in a continuous manner as disclosed, e.g., in JP-B-62-41532. Bulk polymerization does not have the above-described problems and can be seen as industrially advantageous. In a continuous process, since monomers are fed continuously, a monomer concentration reduction, as is incurred in the final stage of a batch-wise polymerization reaction, can be suppressed thereby reducing production of low-molecular components, and it is easy to set the reaction conditions uniformly so that the polymerization temperature distribution can be made narrower. Therefore, a continuous bulk polymerization process is supposed to produce a polymer having a narrow molecular weight distribution in its ideal mode. In practice, nevertheless, it is very likely depending on monomers that the reaction proceeds abruptly to increase the viscosity of the system, which makes temperature control difficult, and a runaway reaction can result. For this, molecular weight design of the polymer is difficult. Additionally, it is difficult to completely eliminate a stagnant zone in a screw extruder used as a reaction apparatus, and gel or a deteriorated product may be formed, resulting in a failure to obtain a homogeneous polymer.

### SUMMARY OF THE INVENTION

The inventors of the present invention have conducted extensive investigations to solve the outstanding problems associated with conventional continuous bulk polymerization processes using alkyl acrylate monomers. They have found as a result that carbon dioxide used as a diluent serves to control the viscosity even with an abrupt reaction progress and thereby secures temperature control to avoid a runaway reaction. They have also found that carbon dioxide used as a diluent eliminates a stagnant zone in a reaction tube or a screw extruder thereby suppressing by-production of gel or a deteriorated product. The present invention has been reached based on these findings.

The present invention provides a process of producing an acrylic pressure-sensitive adhesive comprising continuously feeding a monomer mainly comprising at least one alkyl (meth) acrylate, a radical polymerization initiator and carbon dioxide to a continuous reactor through a mixer and performing continuous bulk polymerization at a polymerization temperature of 50° to 180° C for a residence time of 0.5 to 60 minutes in a continuous reaction zone of said reactor.

Preferred embodiments of the invention are set forth in the sub-claims.

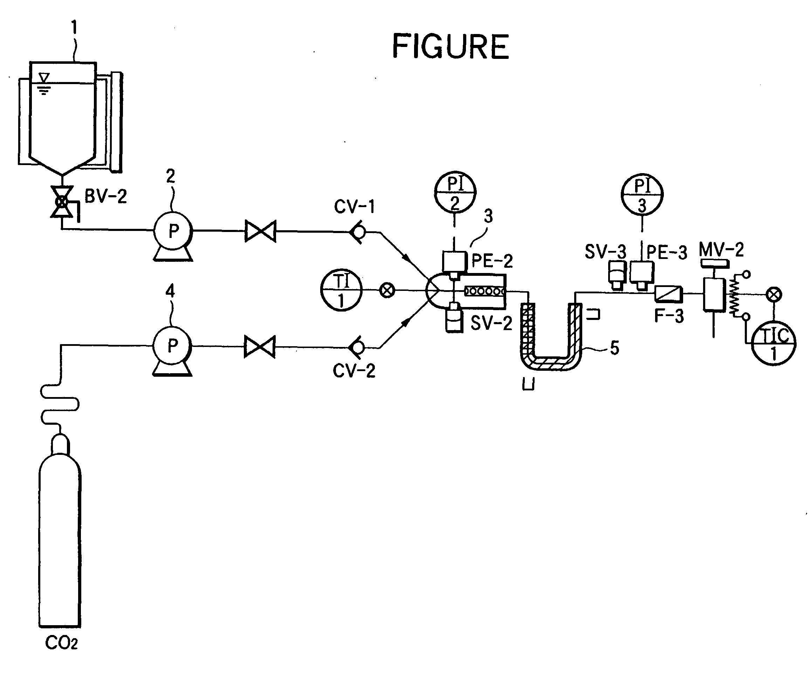

### BRIEF DESCRIPTION OF THE DRAWING

The Figure is a flow chart showing the industrially practical embodiment of the production process according to the present invention.

### DETAILED DESCRIPTION OF THE INVENTION

The monomer or a monomer mixture which can be used in the present invention mainly comprises at least one alkyl (meth)acrylate having, for example, 1 to 18 carbon atoms in the alkyl moiety thereof. Examples are methyl acrylate, ethyl acrylate, propyl acrylate, butyl acrylate, 2-ethylhexyl acrylate, octyl acrylate, butyl methacrylate, 2-ethylhexyl methacrylate, and octyl methacrylate.

If desired, the monomer can further comprise comonomers copolymerizable with the alkyl (meth)acrylate, such as crosslinking monomers and modifying monomers. The crosslinking monomers typically include carboxyl-containing ethylenically unsaturated monomers, such as (meth)acrylic acid, crotonic acid, itaconic acid, maleic acid, and fumaric acid, with acrylic acid being particularly suitable. The modifying monomers include vinyl esters (e.g., vinyl acetate), styrene monomers (e.g., styrene), cyano-containing monomers (e.g., acrylonitrile), and (meth)acrylamide monomers. These comonomers are preferably used in a proportion of not more than 50% by weight based on the total monomer mixture.

The polymerization reaction is effected in the presence of an initiator capable of generating radicals on decomposition. Any initiators useful for radical polymerization are useful. Examples of serviceable radical polymerization initiators include organic peroxides, such as dibenzoyl peroxide, di-t-butyl peroxide, cumene hydroperoxide, and lauroyl peroxide, and azo compounds, such as 2,2-azobisisobutyronitrile and azobisisovaleronitrile.

The initiator is used in an amount generally employed for polymerization of the above-described acrylic monomers. For example, it is used in an amount of 0.005 to 10 parts by weight, preferably 0.1 to 5 parts by weight, per 100 parts by weight of the monomer mixture.

Carbon dioxide as a diluent is used in an amount of 5 to 2,000 parts by weight, preferably 20 to 900 parts by weight, per 100 parts by weight of the monomer mixture. The reaction is carried out in carbon dioxide adjusted to a pressure of 5.73 to 40 MPa at a temperature ranging from 50 to 180°C. If necessary, the reaction pressure and temperature may be set stepwise. By the diluting action of carbon dioxide, the polymerization system is always maintained at a low viscosity and enjoys the stirring effect. Because carbon dioxide acting as a solvent is accompanied with no radical chain transfer, the resulting acrylic polymer has a high molecular weight with a reduced low molecular component content as compared with polymers produced in the presence of an organic solvent. Therefore, the acrylic pressure-sensitive adhesive thus obtained exhibits excellent cohesion and adhesion and hardly contaminates an adherend surface.

While carbon dioxide alone suffices as a diluent, a small amount of an organic solvent may be used in combination if desired for improving miscibility.

The continuous reactor which can be used in the present invention is not particularly limited as long as it is capable of reaction temperature control and continuous transfer. A reactor having high ability to mix the contents and to carry out heat exchange is preferred because (i) acrylic monomers generate much heat on polymerization, (ii) such a reactor enables continuous removal of unreacted monomers therefrom after polymerization, and (iii) it is easy with such a reactor to level the reaction conditions so that the residence time distribution and the polymerization temperature distribution can be narrowed to provide a polymer with a narrow molecular weight distribution. In a particularly advantageous embodiment of the present invention, the monomer(s) is/are polymerized while continuously flowing in a tubular reactor. The length of the reactor depends on the polymerization temperature and pressure, the monomer to carbon dioxide ratio, and the radical initiator concentration. The residence time is set according to the reaction time. A single-screw or twin-screw kneader and a single-screw or twin-screw extruder are also preferred reactors. These reactors can be used in combination.

The reaction temperature is generally set to a relatively high temperature in the case that the residence time is set to be short, and a relatively low temperature in the case that the residence time is set to be long. The residence time is set to 0.5 to 60 minutes, and the reaction temperature is set to 50 to 180°C, preferably 65 to 130°C. The residence time is preferably 1 to 40 minutes, more preferably 5 to 30 minutes. Where the reaction temperature is lower than 50°C, the reaction rate is very slow, which is not practical. Further, where the reaction temperature exceeds 180°C, reaction proceeds rapidly and heat crosslinking may occur. Where the residence time is shorter than 0.5 minute, it is difficult to obtain a sufficient degree of polymerization, and where it exceeds 60 minutes, molecular weight distribution tends to become broad, making difficult to practically use the resulting adhesive. When polymerization is conducted according to the continuous polymerization method of the present invention, the molecular weight distribution can be narrowed, and an acrylic pressure-sensitive adhesive having very less low molecular weight components can be obtained.

In order to obtain a polymer having a narrow molecular weight distribution, it is effective to narrow the residence time distribution. In using a straight pipe reactor, the diameter or the L/D ratio are controlled to narrow the residence time distribution. In using a single- or twin-screw kneader or extruder, the residence time distribution can be narrowed by controlling the position of the paddle or the screw, the clearance between the barrel and the paddle or the screw, and the like.

According to the present invention, there is provided a process for producing an acrylic pressure-sensitive adhesive by continuous bulk polymerization. Compared with solution polymerization, suspension polymerization or emulsion polymerization, the process of the invention affords ease with which reaction conditions such as temperature and concentration are leveled throughout the reactor or the reaction time. Hence, the resulting polymer has a narrow molecular weight distribution (Mw/Mn) with a reduced low molecular component content, exhibits excellent pressure-sensitive adhesion, and hardly contaminates an adherend.

Conventional solution polymerization, suspension polymerization or emulsion polymerization processes involve a step of removing a large quantity of an organic solvent or water used in the polymerization, which leads to an increase of cost. Besides, use of an organic solvent gives rise to an environmental problem. In these respects, the process of the invention uses neither an organic solvent nor water and is therefore environmental-friendly and highly productive.

The present invention will now be illustrated in greater detail by way of Examples. Unless otherwise noted, all the parts and percents are given by weight. The average molecular weight and the molecular weight distribution were determined by GPC analysis. The average molecular weight is on polystyrene conversion.

### EXAMPLE 1

Industrial practice of the process of the invention is shown in the attached Figure. A hundred parts of butyl acrylate and 0.1 part of azobisisobutyronitrile (initiator) were previously mixed and introduced into a reservoir tank 1. The mixture was pressurized to 20 MPa by a high-pressure pump 2 and fed to a joint block 3 equipped with a line mixer at a flow rate controlled by a needle valve. Through a separate line, carbon dioxide compressed to 20 MPa by a high-pressure pump 4 was fed to the mixer at a flow rate controlled by a needle valve. The monomer/initiator mixture and carbon dioxide were mixed uniformly in the joint block 3 and forwarded to a jacketed tubular reactor 5 capable of temperature control (length: 2000 mm; inner diameter: 10 mm). The monomer was polymerized while continuously flowing through the tubular reactor 5 kept at a constant temperature of 80°C with a residence time of about 60 minutes. The polymer produced was discharged in a container through a pressure holding valve simultaneously with carbon dioxide. Carbon dioxide was discharged through a gas meter to give a reading from which the weight of carbon dioxide that had been mixed into the polymer was obtained. The amount of the polymer discharged was 2 g/min, and the amount of carbon dioxide mixed in the polymer was 0.5 g/min.

The continuously obtained bulk polymer had a polymer conversion of 92%, a weight average molecular weight (Mw) of 1,020,000, and a molecular weight distribution (Mw/Mn) of 2.4. The proportion of components having an Mw of 100,000 or less was 2.99% as measured from the molecular weight distribution curve.

### EXAMPLE 2

Polymerization was carried out in the same manner as in Example 1, except for increasing the amount of azobisisobutyronitrile to 0.5 part and changing the residence time to about 6 minutes. The amount of the polymer discharged was 20 g/min, and the amount of carbon dioxide mixed was 5.8 g/min.

The continuously obtained bulk polymer had a polymer conversion of 90.2%, a weight average molecular weight (Mw) of 705,000 and a molecular weight distribution (Mw/Mn) of 2. The proportion of components having an Mw of 100,000 or less was 3.41% as measured from the molecular weight distribution curve.

### EXAMPLE 3

Polymerization was carried out in the same manner as in Example 1, except for replacing butyl acrylate with 2-ethylhexyl acrylate and changing the pressure of the monomer/initiator mixture and that of carbon dioxide both to 10 MPa. The amount of the polymer discharged was 1.58 g/min, and the amount of carbon dioxide mixed was 1.12 g/min.

The continuously obtained bulk polymer had a polymer conversion of 93.6%, a weight average molecular weight (Mw) of 1,110,000, and a molecular weight distribution (Mw/Mn) of 2.99. The proportion of components having an Mw of 100,000 or less was 4.25% as measured from the molecular weight distribution curve.

### EXAMPLE 4

Eighty parts of 2-ethylhexyl acrylate, 20 parts of acryloylmorpholine, and 0.1 part of azobisisobutyronitrile (initiator) were previously mixed and introduced into a reservoir tank 1. The mixture was pressurized to 15 MPa by a high-pressure pump 2 and fed to a joint block 3 equipped with a line mixer at a flow rate controlled by a needle valve. Through a separate line, carbon dioxide compressed to 15 MPa by a high-pressure pump 4 was fed to the mixer at a flow rate controlled by a needle valve. The monomer/initiator mixture and carbon dioxide were mixed uniformly in the joint block 3 and forwarded to a jacketed tubular reactor 5 capable of temperature control (length: 2000 mm; inner diameter: 10 mm). The monomer was polymerized while flowing through the tubular reactor 5 kept at a constant temperature of 70°C with a residence time of about 70 minutes. The polymer produced was discharged in a container through a pressure holding valve simultaneously with carbon dioxide. Carbon dioxide was discharged through a gas meter to give a reading from which the weight of carbon dioxide that had been mixed into the polymer was obtained. The amount of the polymer discharged was 1 g/min, and the amount of carbon dioxide mixed was 0.9 g/min.

The continuously obtained bulk polymer had a polymer conversion of 90.1%, a weight average molecular weight (Mw) of 1,790,000, and a molecular weight distribution (Mw/Mn) of 5.4. The proportion of components having an Mw of 100,000 or less was 6.43% as measured from the molecular weight distribution curve.

### EXAMPLE 5

Eighty parts of 2-ethylhexyl acrylate, 20 parts of acryloylmorpholine, 3 parts of acrylic acid, and 0.1 part of azobisisobutyronitrile (initiator) were previously mixed and introduced into a reservoir tank 1. The mixture was pressurized to 20 MPa by a high-pressure pump 2 and fed to a joint block 3 equipped with a line mixer at a flow rate controlled by a needle valve. Through a separate line, carbon dioxide compressed to 20 MPa by a high-pressure pump 4 was fed to the mixer at a flow rate controlled by a needle valve. The monomer/initiator mixture and carbon dioxide were mixed uniformly in the joint block 3 and forwarded to a jacketed tubular reactor 5 capable of temperature control (length: 2000 mm; inner diameter: 12 mm). The monomer was polymerized while flowing through the tubular reactor 5 kept at a constant temperature of 60°C with a residence time of about 100 minutes. The polymer produced was discharged in the same manner as in Example 1. The amount of the polymer discharged was 1 g/min, and the amount of carbon dioxide mixed was 1 g/min.

The continuously obtained bulk polymer had a polymer conversion of 83.5%, a weight average molecular weight (Mw) of 2,460,000 and a molecular weight distribution (Mw/Mn) of 4.2. The proportion of components having an Mw of 100,000 or less was 2.24% as measured from the molecular weight distribution curve.

### EXAMPLE 6

Polymerization was carried out in the same manner as in Example 4, except that the monomer/initiator mixture and carbon dioxide were each pressurized to 25 MPa, and polymerization temperature and the residence time were changed to 65°C and about 120 minutes, respectively. The amount of the polymer discharged was 0.8 g/min, and the amount of carbon dioxide mixed was 1.0 g/min.

The continuously obtained bulk polymer had a polymer conversion of 90.4%, a weight average molecular weight (Mw) of 2,010,000 and a molecular weight distribution (Mw/Mn) of 5.64. The proportion of components having an Mw of 100,000 or less was 5.55% as measured from the molecular weight distribution curve.

### COMPARATIVE EXAMPLE

A hundred parts of butyl acrylate and 0.1 part of azobisisobutyronitrile (initiator) were previously mixed and introduced into a reservoir tank 1. The mixture was pressurized to 20 MPa by a high-pressure pump and fed to a joint block equipped with a line mixer at a flow rate controlled by a needle valve. Without being mixed with carbon dioxide, the monomer/initiator mixture was forwarded to a jacketed tubular reactor (length: 2000 mm; inner diameter: 10 mm) kept at 80°C to be polymerized. The monomer was made to flow continuously at a residence time of about 60 minutes, but in the course of time the reaction got out of control to produce a polymer gel, which clogged the reactor and was not discharged.

## Claims

1. A process of producing an acrylic pressure-sensitive adhesive comprising continuously feeding a monomer mainly comprising at least one alkyl (meth) acrylate, a radical polymerization initiator and carbon dioxide to a continuous reactor through a mixer and performing continuous bulk polymerization at a polymerization temperature of 50° to 180°C for a residence time of 0.5 to 60 minutes in a continuous reaction zone of said reactor.

2. The process of claim 1, wherein said polymerization temperature is 65° to 130°C.

3. The process of claim 1, wherein the acrylic pressure-sensitive adhesive comprises 10% by weight or less, based on the weight of the total monomers, of components having a weight average molecular weight of 100,000 or less.

4. The process of claim 1, wherein the acrylic pressure-sensitive adhesive comprises 6.5% by weight or less, based on the weight of the total monomers, of components having a weight average molecular weight of 100,000 or less.

## Patentansprüche

1. Verfahren zum Herstellen eines Acrylhaftklebstoffes, umfassend das kontinuierliche Zuführen eines Monomers, das mindestens ein Alkyl(meth)acrylat als Hauptbestandteil umfasst, eines Initiators für die radikalische Polymerisation und von Kohlendioxid über einen Mischer in einen kontinuierlichen Reaktor und das kontinuierliche Durchführen einer Massepolymerisation bei einer Polymerisationstemperatur im Bereich von 50°C bis 180°C über eine Verweilzeit im Bereich von 0,5 bis 60 Minuten in einer kontinuierlichen Reaktionszone des Reaktors.

2. Verfahren nach Anspruch 1, wobei die Polymerisationstemperatur im Bereich von 65°C bis 130°C liegt.

3. Verfahren nach Anspruch 1, wobei der Acrylhaftklebstoff 10 Gew.% oder weniger, bezogen auf das Gewicht aller Monomere, Bestandteile mit einem gewichtsgemittelten Molekulargewicht von 100000 oder weniger umfasst.

4. Verfahren nach Anspruch 1, wobei der Acrylhaftklebstoff 6,5 Gew.% oder weniger, bezogen auf das Gewicht aller Monomere, Bestandteile mit einem gewichtsgemittelten Molekulargewicht von 100000 oder weniger umfasst.

## Revendications

1. Procédé de production d'un adhésif acrylique sensible à la pression, comprenant l'apport en continu d'un monomère comprenant principalement au moins un (méth) acrylate d'alkyle, un initiateur de polymérisation radicalaire et du dioxyde de carbone à un réacteur continu à travers un mélangeur, et la réalisation de la polymérisation continue en masse à une température de polymérisation de 50 °C à 180°C avec un temps de séjour de 0,5 à 60 minutes dans une zone de réaction continue dudit réacteur.

2. Procédé selon la revendication 1, dans lequel ladite température de polymérisation est de 65 °C à 130 °C.

3. Procédé selon la revendication 1, dans lequel l'adhésif acrylique sensible à la pression comprend 10 % en poids ou moins, sur la base du poids de la totalité des monomères, de composants ayant une masse moléculaire moyenne en poids de 100 000 ou moins.

4. Procédé selon la revendication 1, dans lequel l'adhésif acrylique sensible à la pression comprend 6,5 % en poids ou moins, sur la base du poids de la totalité des monomères, de composants ayant une masse moléculaire moyenne en poids de 100 000 ou moins.
